# EUROPÄISCHE PATENTSCHRIFT

(11) **EP 0 585 733 B1**
(45) Veröffentlichungstag und Bekanntmachung des Hinweises auf die Patenterteilung: **12.06.1996**
(21) Anmeldenummer: 93113203.9
(22) Anmeldetag: 18.08.1993
(51) Int. Cl.: B60S 11/00, B66F 3/08, B66F 3/12, H01F 7/02

(54) **Hebevorrichtung zum Anheben eines Fahrzeugs**
Jack for raising a vehicle
Cric pour soulever un véhicule

(30) Priorität: 03.09.1992 DE 4229446; 11.11.1992 DE 4238052
(43) Veröffentlichungstag der Anmeldung: 09.03.1994
(73) Patentinhaber: E.A. STORZ GMBH & CO. KG, D-78532 Tuttlingen (DE)
(72) Erfinder: Pfeiffer, Thomas, D-78606 Seitingen-Oberflacht (DE)
(74) Vertreter: Hoeger, Stellrecht & Partner

(56) Entgegenhaltungen:
- DE-A- 3 040 989
- DE-C- 3 532 375
- US-A- 3 871 620

## Beschreibung

Die Erfindung betrifft eine Hebevorrichtung zum Anheben eines Fahrzeugs, insbesondere einen Wagenheber für einen Personenkraftwagen, wobei sich die Erfindung vor allem mit solchen Wagenhebern befaßt, die eine an ihrem unteren Ende mit einem Fuß zum Aufsetzen des Wagenhebers auf den Boden versehene Standsäule besitzen, an der im Abstand von diesem Fuß ein um eine erste Querachse schwenkbarer Tragarm angelenkt ist, welcher im Bereich seines freien Endes einen Lastaufnahmebereich zum Ansetzen an der Fahrzeugkarosserie aufweist und sich relativ zur Standsäule mittels einer Gewindespindel verschwenken läßt, die im Bereich des oberen Endes der Standsäule und am Tragarm zwischen dessen Anlenkstelle und dessen Lastaufnahmebereich um eine zweite bzw. eine dritte Querachse schwenkbar angelenkt ist und sich mittels einer Handkurbel drehen läßt; dabei ist im Bereich der zweiten oder dritten Querachse eine auf der Gewindespindel laufende Mutter vorgesehen.

Nachdem heutzutage vor allem bei Personenkraftwagen Reifendefekte kaum mehr auftreten und infolgedessen ein Laufrad vom Fahrer kaum mehr gewechselt werden muß, sind die meisten Fahrer im Umgang mit Wagenhebern völlig ungeübt; ein Wagenheber muß aber an ganz bestimmten und durch die Fahrzeugkonstruktion vorgegebenen Stellen der Fahrzeugkarosserie angesetzt werden, u.a. deshalb, weil sonst das Fahrzeug nahezu unweigerlich beschädigt wird, so daß dem richtigen Ansetzen des Wagenhebers eine große Bedeutung zukommt, was für die Zukunft in noch höherem Maße gelten dürfte, nachdem mehrere Hersteller von Personenkraftwagen beabsichtigen, Fahrzeuge auf den Markt zu bringen, deren Karosserie einschließlich der Tragholme der Bodengruppe vollständig aus Leichtmetall-Legierungen besteht. Das richtige Ansetzen eines Wagenhebers an den hierfür vorgesehenen Stellen der Karosserie wird noch dadurch erschwert, daß die an der Fahrzeugkarosserie vorgesehenen eigentlichen Wagenheber-Ansetzstellen von einer einen Wagenheber bedienenden, neben dem Fahrzeug stehenden oder knienden Person gar nicht gesehen werden können, weil seitliche Schürzen oder der sogenannte Karosserieschweller in Blickrichtung zwischen der Bedienungsperson und der aufzusuchenden Wagenheber-Ansetzstelle liegt.

Deshalb lag der Erfindung die Aufgabe zugrunde, einen Wagenheber zu schaffen, mit dem das Auffinden der an der Fahrzeugkarosserie vorgesehenen Wagenheber-Ansetzstellen, an denen der Lastaufnahmebereich des Wagenhebers anzusetzen ist, leichter fällt als mit den bisher bekannten Wagenhebern.

Ausgehend von einem Wagenheber mit einem auf dem Boden aufsetzbaren Fuß und einem diesem gegenüber höhenverstellbaren Lastträger, welcher einen Lastaufnahmebereich zum Ansetzen an einer Wagenheber-Ansetzstelle der Karosserie aufweist, läßt sich diese Aufgabe erfindungsgemäß dadurch lösen, daß der Lastaufnahmebereich des Wagenheber-Lastträgers mit einem Magneten zum Zusammenwirken mit einem an der Wagenheber-Ansetzstelle der Karosserie angeordneten ferromagnetischen Element versehen ist, wobei sich die Wagenheber-Ansetzstelle der Karosserie in einem nicht-ferromagnetischen Karosseriebereich befindet. Bei Verwendung eines hinreichend starken Magneten (und dies ist angesichts der heute auf dem Markt verfügbaren, außerordentich starken gesinterten Permanentmagnete ohne weiteres möglich) reicht es dann aus, mit dem Lastaufnahmebereich des Wagenhebers in die Nähe der Wagenheber-Ansetzstelle der Karosserie zu kommen, worauf der Lastaufnahmebereich des Wagenhebers in die richtige Ansetzstellung gezogen wird.

Bei einer Aluminiumkarosserie ist die Verwirklichung der erfindungsgemäßen Hebevorrichtung besonders einfach, weil es dann nur erforderlich ist, an den Wagenheber-Ansetzstellen der Karosserie z.B. einfache Stahlplättchen anzubringen. Aber auch bei den heute noch gebräuchlichen Karosserien aus Stahlblech oder verzinktem Stahlblech läßt sich die erfindungsgemäße Hebevorrichtung verhältnismäßig einfach verwirklichen, indem man die Karosserie dort, wo sich die Wagenheber-Ansetzstellen befinden sollen, mit Aufsätzen oder Einsätzen aus nicht-ferromagnetischem Material versieht, insbesondere mit Aufsätzen oder Einsätzen aus einem geeigneten Kunststoff, an denen oder in denen die mit dem Wagenheber zusammenwirkenden ferromagnetischen Elemente angeordnet sind.

Grundsätzlich läßt sich die erfinderische Lösung der gestellten Aufgabe auch dadurch verwirklichen, daß Magnete an den Wagenheber-Ansetzstellen der Karosserie angeordnet werden und der Wagenheber an seinem Lastaufnahmebereich mit einem ferromagnetischen Element versehen wird - es ist weit verbreitet, den Lastaufnahmebereich von Wagenhebern von einem Kunststoffteil bilden zu lassen, es sind aber auch Wagenheber bekannt, deren Standsäule und Tragarm aus einer Leichtmetall-Legierung bestehen, weshalb es problemlos ist, am Lastträger des Wagenhebers ein ferromagnetisches Element anzuordnen, in dessen Nachbarschaft sich nur nicht-ferromagnetische Bauteile des Wagenhebers befinden. Außerdem läßt sich das Grundprinzip der erfindungsgemäßen Lösung der gestellten Aufgabe auch dadurch verwirklichen, daß sowohl an den Wagenheber-Ansetzstellen der Karosserie, als auch am Lastaufnahmebereich des Wagenheber-Lastträgers Magnete derart angeordnet werden, daß sich beim Ansetzen des Wagenhebers an der Karosserie ungleiche Magnetpole gegenüberstehen. Allerdings dürfte im allgemeinen die Anordnung von Magneten an den Wagenheber-Ansetzstellen einer Fahrzeugkarosserie nicht als besonders vorteilhaft angesehen werden, weil ohne Abdeckungen für diese Magnete letztere sonst den Witterungseinflüssen ausgesetzt sind und dazu neigen können, ferromagnetische Partikel aus dem von den Fahrzeugrädern hochgeschleuderten Schmutz festzuhalten.

Die bevorzugt zum Einsatz kommenden bekannten Sintermagnete sollten nach Möglichkeit keiner Belastung ausgesetzt werden, da ihre Druckfestigkeit nicht besonders hoch ist; deshalb empfiehlt es sich, einen erfindungsgemäßen Wagenheber im Falle der Verwendung eines solchen Magneten so auszubilden, daß dieser in ein die Hublast aufnehmendes Teil eingelassen ist und somit beim Hubvorgang lastfrei bleibt; zusätzlich oder alternativ zu dieser Mapnahme kann es empfehlenswert sein, einen erfindungsgemäßen Wagenheber so zu gestalten, daß der Lastaufnahmebereich seines Lastträgers eine die Hublast aufnehmende Auflagefläche für die Wagenheber-Ansetzstelle der Fahrzeugkarosserie aufweist, daß ferner der Magnet auf dieser Auflagefläche einen Vorsprung bildet und daß die Wagenheber-Ansetzstelle der Karosserie eine Aussparung für einen Eingriff dieses Vorsprungs von unten aufweist und das ferromagnetische Element in dieser Aussparung angeordnet ist; ebensogut könnte es aber gerade umgekehrt sein, daß nämlich die Aussparung in der die Hublast aufnehmenden Auflagefläche des Wagenhebers vorgesehen, der Magnet in dieser Aussparung angeordnet und das ferromagnetische Element als Karosserievorsprung ausgebildet oder Teil eines solchen Vorsprungs ist, welcher in die Aussparung am Wagenheber-Lastträger eingreift. In jedem Fall kann die Konstruktion so gestaltet werden, daß der Magnet beim Hubvorgang lastfrei bleibt, wobei die beiden zuletzt beschriebenen Ausführungsformen den zusätzlichen Vorteil mit sich bringen, daß nach Auffinden der Wagenheber-Ansetzstelle mit Hilfe des Magneten eine formschlüssige Sicherung gegen ein Verrutschen des Wagenhebers gegeben ist.

Nachdem man in einer erfindungsgemäßen Hebevorrichtung vorteilhafterweise einen Permanentmagneten einsetzen wird, welcher u.U. beim Wegstauen des Wagenhebers oder bei z.B. im Kofferraum abgelegtem Wagenheber nachteilige Effekte zur Folge haben könnte (Hängenbleiben metallischer, im Kofferraum abgelegter Gegenstände oder Beeinträchtigung von in der Nähe abgelegter Tonbandkassetten), wird zur Vermeidung solcher Effekte vorgeschlagen, an einem erfindungsgemäßen Wagenheber für einen solchen Permanentmagneten eine schaltbare Kurzschlupeinrichtung vorzusehen; diese kann z.B. die Gestalt eines U-förmigen Jochs aus Weicheisen haben, welches im Lastaufnahmebereich des Wagenheber-Lastträgers so verschiebbar ist, daß es in seiner wirksamen Position den Magnetfluß zwischen den beiden Magnetpolen kurzschließt.

Am einfachsten läßt sich eine nicht-ferromagnetische Wagenheber-Ansetzstelle an einer Karosserie, welche nicht schon von Hause aus nicht-ferromagnetisch ist, dadurch schaffen, daß man die Wagenheber-Ansetzstelle an einem nichtmetallischen Teil, insbesondere einem Kunststoffteil, von ungefähr pilzförmiger Gestalt ausbildet, welches mit seinem Fuß in ein Loch der Karosserie eingreift und dort verrastet ist sowie sich mit dem Pilzkopf von unten an der Karosserie abstützt; es bedarf dann nur der Herstellung eines Lochs in der Karosserie, weil man den Fuß eines solchen pilzförmigen Kunststoffteils ohne weiteres mit nachgiebigen Vorsprüngen versehen kann, die hinter der mit dem Loch versehenen Wand der Karosserie verrasten, wobei dann die im Gebrauch untere Seite des Pilzkopfes die Wagenheber-Ansetzstelle bildet.

Im Hinblick auf die Tendenz, das Leergewicht eines Personenkraftwagens möglichst klein zu halten, bestehen bei einer besonders vorteilhaften Ausführungsform des erfindungsgemäßen Wagenhebers zumindest die meisten seiner Teile mit Ausnahme des Magneten aus einer Leichtmetall-Legierung; aus Festigkeitsgründen kann dies unter Umständen nicht z.B. für eine Gewindespindel des Wagenhebers gelten, unter Umständen aber auch nicht für den Lastträger.

Weitere Merkmale, Vorteile und Einzelheiten der Erfindung ergeben sich aus der nachfolgenden Beschreibung sowie der beigefügten zeichnerischen Darstellung mehrerer besonders zu bevorzugender Ausführungsformen des erfindungsgemäßen Wagenhebers; in der Zeichnung zeigen:
- Fig. 1:: eine Seitenansicht der ersten Ausführungsform, bei der es sich um einen sogenannten Einarm-Scherenheber handelt, der in Figur 1 in einem Zustand dargestellt wurde, der erreicht wird, nachdem man den Tragarm des Wagenhebers bereits um einen gewissen Winkel aus seiner unteren Grundstellung herausgeschwenkt hat;
- Fig. 2:: die untere Hälfte des in Figur 1 gezeigten Wagenhebers mit dessen Tragarm in seiner Grundstellung und einem darüber liegenden Karosseriebereich eines anzuhebenden Personenkraftwagens, wobei dieser Karosseriebereich im Schnitt senkrecht zur Fahrzeuglängsachse gezeichnet wurde und aus dem unteren Teil eines Tragholms und eines benachbarten Karosserieschwellers besteht;
- Fig. 3:: eine der Figur 2 entsprechende Darstellung der zweiten Ausführungsform der erfindungsgemäßen Hebevorrichtung;
- Fig. 4A:: den Lastaufnahmebereich des als Tragarm ausgebildeten Lastträgers des in Fig. 3 dargestellten Wagenhebers in der Seitenansicht;
- Fig. 4B:: eine Draufsicht dieses Lastaufnahmebereichs, d.h. eine Ansicht gemäß Fig. 4A von oben.
- Fig. 5:: eine der Fig. 2 entsprechende Darstellung einer dritten Ausführungsform des erfindungsgemäßen Wagenhebers, welcher geeignet ist, z.B. mit einer gemäß Fig. 2 ausgebildeten Fahrzeugkarosserie zusammenzuwirken, und
- Fig. 6:: einen Vertikalschnitt durch eine Magnet-Aufnahme des Lastträgers einer vierten Ausführungsform.

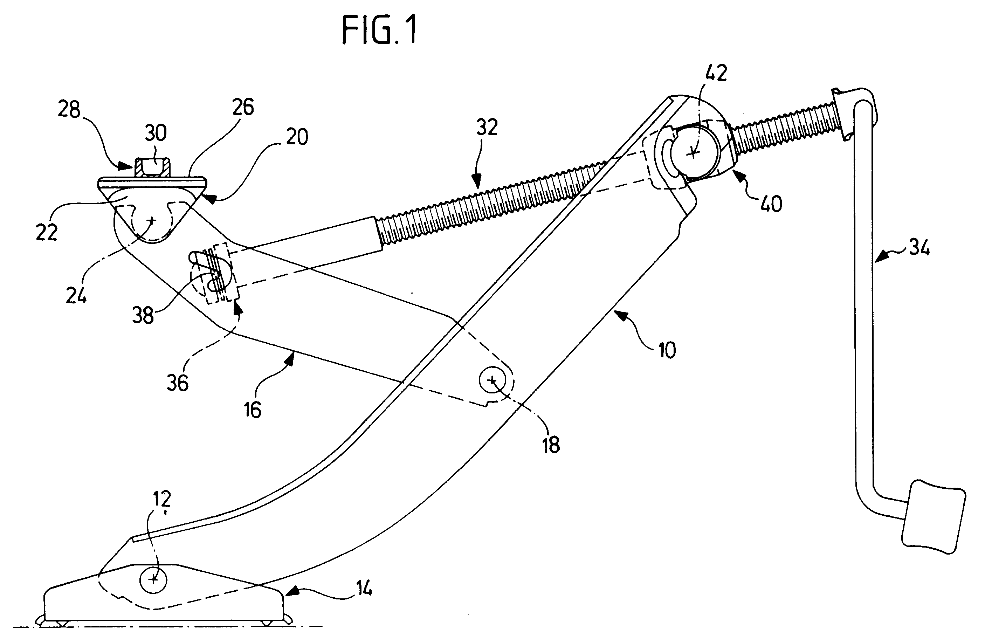

Die Fig. 1 zeigt eine Standsäule 10 des Wagenhebers der ersten Ausführungsform der erfindungsgemäßen Hebevorrichtung, wobei diese Standsäule im Schnitt senkrecht zu ihrer Längsrichtung ein U-förmiges, gemäß Figur 1 nach links und oben offenes Profil besitzt; am unteren Ende der Standsäule 10 ist ein um eine erste Querachse 12 schwenkbarer Fuß 14 angelenkt (diese Querachse ist also senkrecht zur Zeichnungsebene der Fig. 1 orientiert), der in einem Vertikalschnitt senkrecht zur Zeichnungsebene der Figur 1 gleichfalls ein U-förmiges, nach oben offenes Profil besitzt, so daß das untere Ende der Standsäule 10 zwischen die beiden seitlichen Schenkel des Fußes 14 eingreift.

Ein Tragarm 16 hat im Schnitt senkrecht zu seiner Längsrichtung ein gleichfalls U-förmiges, nach oben offenes Profil und greift mit seinem gemäß Figur 1 rechten Ende zwischen die beiden Seitenwände der Standsäule 10 ein und ist an diesen um eine zweite Querachse 18 schwenkbar angelenkt. An seinem freien, gemäß Figur 1 linken Ende ist der Tragarm 16 mit einem Lastträger 20 versehen, welcher mit zwei Seitenwänden 22 das freie Ende des Tragarms 16 übergreift und an dessen Seitenwänden um eine dritte Querachse 24 schwenkbar angelenkt ist, so daß sich der Lastträger 20 im Zuge des Anhebens der Fahrzeugkarosserie durch Hochschwenken des Tragarms 16 an die jeweilige Lage der Unterseite der Fahrzeugkarosserie anpassen kann. An seiner Oberseite hat der Lastträger 20 eine die Hublast aufnehmende Auflagefläche 26, in deren Mitte eine in Figur 1 im Vertikalschnitt dargestellte topfförmige Aufnahme 28 aus einem nicht-ferromagnetischen Material befestigt ist. In dieser ist ein von oben eingesetzter Magnet 30 befestigt, dessen den einen Magnetpol bildende Oberseite etwas tiefer liegt als die oberen Ränder der Aufnahme 28. Bei dem Lastträger 20 und der Aufnahme 28 kann es sich um Teile aus einem genügend harten Kunststoff handeln, und in diesem Fall kann die Aufnahme 28 auch mit dem Lastträger 20 einstückig sein, so daß man die gesamte Einheit mit Ausnahme des Magneten 30 als Kunststoff-Spritzgußteil herstellen kann.

Schließlich besitzt der Wagenheber noch eine Gewindespindel 32, an deren einem, gemäß Figur 1 rechten Ende eine Handkurbel 34 angelenkt ist und deren anderes, gemäß Figur 1 linkes Ende mittels eines von der Gewindespindel 32 getragenen Axiallagers 36 um eine vierte Querachse 38 schwenkbar an den Seitenwänden des Tragarms 16 angelenkt ist. Im Bereich des oberen Endes der Standsäule 10 ist an deren Seitenwänden eine Mutter 40 um eine fünfte Querachse 42 schwenkbar angelenkt; in dieser Mutter läuft die Gewindespindel 32, so daß sich durch Drehen der Gewindespindel der Tragarm 16 hochschwenken und wieder absenken läßt.

Da der ganze Wagenheber mit Ausnahme der Gestaltung der Oberseite des Lastträgers 20, der topfförmigen Aufnahme 28 und des Magneten 30 bekannter Stand der Technik ist, kann auf eine detailliertere Schilderung der Wagenheberkonstruktion verzichtet werden.

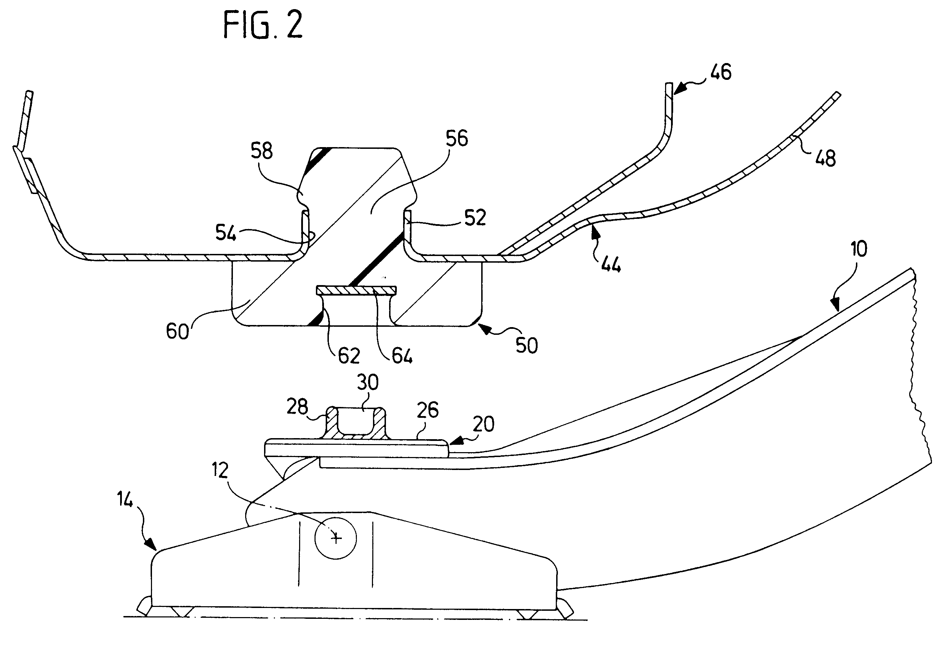

Der obere Teil der Figur 2 zeigt einen Karosseriebereich 44 mit einem Tragholm 46 und einem Karosserieschweller 48, bei denen es sich um Teile aus einer Leichtmetall-Legierung handeln soll. An der Unterseite dieses Karosseriebereichs wurde zur Befestigung einer Wagenheberaufnahme 50 ein von einem im Innern der Karosserie liegenden Kragen 52 umgebenes Loch 54 hergestellt, in welches ein Fuß 56 der Wagenheberaufnahme 50 eingreift, die erfindungsgemäß als Kunststoffteil mit (im Schnitt senkrecht zur Fahrzeuglängsachse) ungefähr pilzförmigem Querschnitt ausgebildet ist. An seiner Außenseite ist der Fuß 56 mit im Schnitt ungefähr sägezahnförmigen Rastvorsprüngen 58 versehen, die, wenn man die Wagenheberaufnahme 50 in das Loch 54 eindrückt, hinter dem Kragen 52 verrasten, wenn die vom "Pilzkopf" gebildete Wagenheber-Ansetzstelle 60 der Wagenheberaufnahme 50 satt gegen die Karosserie anliegt. In die Wagenheberansetzstelle 60 ist eine nach unten offene Vertiefung 62 eingeformt, auf deren Boden ein Stahlplättchen 64 sitzt. Erfindungsgemäß wurde dieses bei der Herstellung der Wagenheberaufnahme 50 als Kunststoff-Spritzgußteil in die Form eingelegt und an seinem Rand derart mit Kunststoff umspritzt, daß das Kunststoffteil im Bereich des Bodens der Vertiefung 62 einen das Stahlplättchen 64 haltenden Hinterschnitt aufweist. Der Querschnitt und die Höhe der Vertiefung 62 unterhalb des Stahlplättchens 64 ist an den Querschnitt und die Höhe der Magnet-Aufnahme 28 des Wagenhebers so angepaßt, daß sich die Aufnahme 28 nicht nur in die Vertiefung 62 einschieben läßt, sondern daß die Höhe der Aufnahme 28 über der Auflagefläche 26 des Wagenheber-Lastträgers 20 höchstens gleich groß, vorzugsweise kleiner ist als der Abstand der Unterseite des Stahlplättchens 64 von der Unterseite der Wagenheber-Ansetzstelle 60 bzw. der Wagenheberaufnahme 50. Es ist also dafür gesorgt, daß der Magnet 30 lastfrei bleibt.

Nähert man beim Versuch, den Wagenheber an der Karosserie anzusetzen, den Wagenheber-Lastträger 20 von unten demjenigen Karosseriebereich, an dem die Wagenheberaufnahme 50 angeordnet ist, zieht der Magnet 30 seine Aufnahme 28 in die Vertiefung 62 der Wagenheberaufnahme 50 hinein, so daß stets ein richtiges Ansetzen des Wagenhebers an der Karosserie gewährleistet ist. Auch kann der Magnet 30 ohne weiteres so stark sein, daß er den Wagenheber-Tragarm 16 an der Wagenheberaufnahme 50 der Karosserie hält, bis man durch Drehen der Handkurbel 34 den Tragarm 16 gegenüber der Standsäule 10 so weit hochgeschwenkt hat, daß der Fuß 14 auf dem Boden aufliegt.

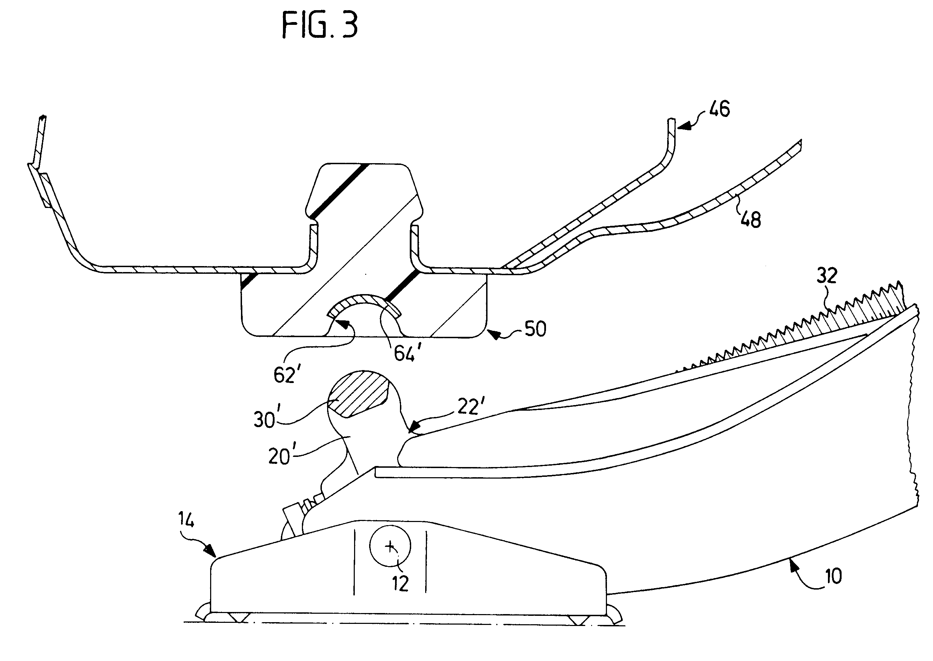

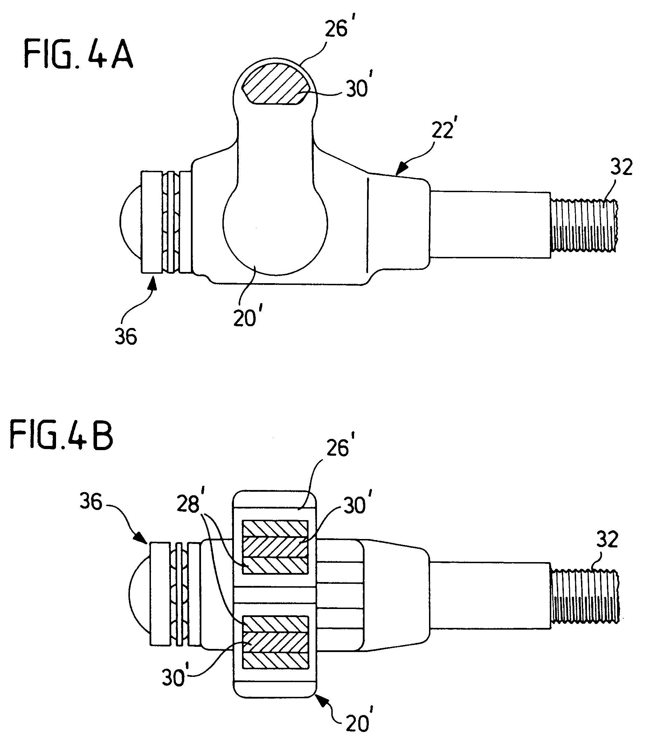

Da sich die zweite Ausführungsform nach den Figuren 3, 4A und 4B nur in der Gestaltung des Lastträgers des Wagenhebers und der Vertiefung der an der Karosserie angeordneten Wagenheberaufnahme von der Ausführungsform nach den Figuren 1 und 2 unterscheidet, sollen nur die unterschiedlichen Gestaltungsmerkmale dieser zweiten Ausführungsform beschrieben werden. Soweit es für ein Verständnis der Figuren 3, 4A und 4B erforderlich ist, wurden in diesen Zeichnungsfiguren dieselben Bezugszeichen verwendet wie in den Figuren 1 und 2.

Bei dieser zweiten Ausführungsform ist ein aus einem harten geeigneten Kunststoff hergestellter Wagenheber-Lastträger 20' an einer von der Gewindespindel 32 durchgriffenen und gegen das Axiallager 36 anliegenden Buchse fest angeordnet; die eine Auflagefläche 26' bildende Oberseite des Lastträgers 20' hat im Schnitt längs einer vertikalen und durch die Achse der Gewindespindel 32 verlaufenden Ebene ein halbkreisförmiges Profil, d.h. sie bildet die halbe Mantelfläche eines Kreiszylinders, und in der an der Karosserie angeordneten Wagenheberaufnahme 50 ist eine entsprechend gestaltete Vertiefung 62' vorgesehen - letztere hat also im Schnitt senkrecht zur Fahrzeug-Längsrichtung die Gestalt eines halben Kreiszylinders und sie ist in Richtung senkrecht zur Zeichnungsebene der Figur 3 ebenso lang oder nur geringfügig länger als der Lastträger 20' und wird an ihren Stirnenden durch parallel zur Zeichnungsebene der Figur 3 verlaufende Stirnwände abgeschlossen. Wie die Figur 3 erkennen läßt, wurde auch bei der Herstellung der Wagenheberaufnahme 50 dieser zweiten Ausführungsform in das diese Wagenheberaufnahme bildende Kunststoffteil ein Stahlblechteil 64' eingelegt, das die Gestalt eines Segments eines Kreiszylindermantels hat und mit zwei Permanentmagneten 30' zusammenwirkt, deren jeder zwischen zwei Stahlblechplättchen 28' angeordnet und zusammen mit diesen in jeweils eine entsprechend gestaltete Ausnehmung des Lastträgers 20' eingesetzt ist. Wie die Figur 4A zeigt, ist es auch bei dieser Ausführungsform zweckmäßig, die Magnete 30' gegenüber der Auflagefläche 26' etwas zurückzusetzen, damit die Magnete während des Hubvorgangs lastfrei bleiben. Natürlich bilden die oberen bzw. freien Flächen der Magnete 30' wieder jeweils einen Magnetpol, wobei diese Magnetpole der beiden Magnete 30' gleichnamig oder ungleichnamig sein können; vorteilhafterweise sind sie ungleichnamig, weil sich dann besonders hohe Anziehungskräfte zwischen den Magneten und dem Stahlblechteil 64' ergeben.

Bei dieser zweiten Ausführungsform liegt die Auflagefläche 26' des Lastträgers 20' in jeder Phase des Hubvorgangs satt an der Wand der Vertiefung 62' an, auch wenn während des Hubvorgangs die beiden kreiszylindrischen Flächen aufeinander gleiten.

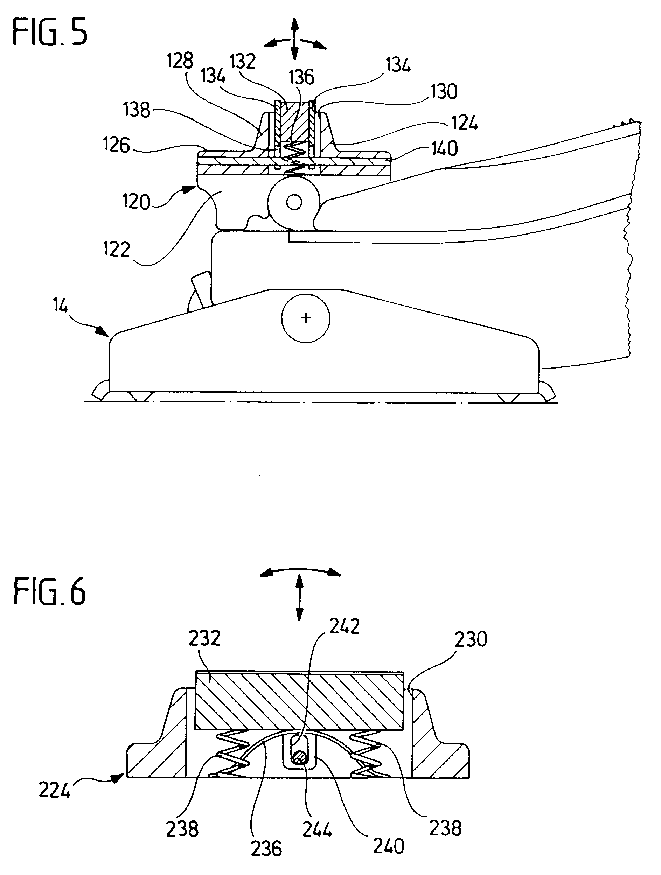

Da sich die in Figur 5 gezeigte Ausführungsform des erfindungsgemäßen Wagenhebers - soweit die vorliegende Erfindung betroffen ist - nur hinsichtlich der Ausbildung des Lastaufnahmebereichs des am schwenkbaren Wagenheber-Tragarm angeordneten Lastträgers unterscheidet, soll auch nur dieser modifizierte Lastträger im folgenden beschrieben werden.

Der in Figur 5 dargestellte Lastträger 120 hat einen Kunststoff-Basiskörper 122, auf dem mit Hilfe nicht dargestellter Mittel ein gleichfalls aus Kunststoff bestehendes Lastaufnahmeteil 124 befestigt ist. Letzteres bildet eine Lastaufnahmefläche 126 und einen zentralen Vorsprung 128, der beim Ansetzen des Wagenhebers an einer Fahrzeugkarosserie z.B. in die Vertiefung 62 der in Figur 2 dargestellten Wagenheber-Aufnahme 50 eingreift. Der Vorsprung 128 ist mit einer zentralen schachtartigen Aussparung 130 versehen, welche sich senkrecht zur Lastaufnahmefläche 126 erstreckt und der Aufnahme eines Magneten 132 dient, dessen Pole oben und unten liegen (gemäß Figur 5) und an dem seitlich zwei Stahlblechplättchen 134 fest angebracht sind. Zwischen dem Basiskörper 122 und dem Magneten 132 ist eine Druckfeder 136 angeordnet, und um den Magneten 132 unverlierbar in der Aussparung 130 zu halten, sind an den Stahlblechplättchen 134 und im Lastaufnahmeteil 124 Mittel 138 bzw. 140 vorgesehen, welche einerseits ein Herausfallen des Magneten 132 aus der Aussparung 130 bzw. ein Herausschieben des Magneten durch die Feder 136 verhindern und es andererseits zulassen, daß beim Anheben des Fahrzeugs, d.h. beim Belasten des Lastträgers 120, der Magnet 132 aus seiner in Figur 5 dargestellten Stellung heraus nach unten in das Lastaufnahmeteil 124 hineingeschoben wird. Bei dem Teil 140 kann es sich nun z.B. um einen nicht-ferromagnetischen Stift handeln, welcher in einer entsprechenden Bohrung des Lastaufnahmeteils 124 festgelegt wurde und die als Langlöcher ausgebildeten Mittel 138 in den Stahlblechplättchen 134 durchgreift; bei dem Teil 140 könnte es sich aber auch um ein nicht-ferromagnetisches Metallplättchen handeln, welches Öffnungen für den Durchtritt z.B. L-förmiger Füßchen 138 der Stahlblechplättchen 134 aufweist, so daß sich diese Füßchen zwar in dem Metallplättchen 140 verschieben, nicht jedoch nach oben aus dem Metallplättchen herausziehen lassen. Bei der dargestellten Ausführungsform sollen nun die Aussparung 130 sowie die Mittel 138 und 140 so gestaltet sein, daß der Magnet 132 nicht nur (gemäß Figur 5) vertikal verschiebbar ist, sondern auch nach den Seiten geschwenkt werden kann, so wie dies durch die beiden Doppelpfeile in Figur 5 angedeutet wurde.

Die Figur 6 zeigt eine abgewandelte Ausführungsform des Lastaufnahmeteils des in Figur 5 dargestellten Wagenhebers. Das in Figur 6 als Ganzes mit 224 bezeichnete Lastaufnahmeteil hat eine der Aufnahme eines Magneten 232 dienende Aussparung 230. Zwischen einem dem Basiskörper 122 des in Figur 5 dargestellten Lastträgers 120 entsprechenden Bereich des Lastträgers und dem Magneten 232 sind eine zentral angeordnete bügelförmige Blattfeder 236 sowie zwei seitlich angeordnete Schraubenfedern 238 vorgesehen, wobei die Blattfeder 236 den Magneten 232 nach oben drücken soll und die beiden Schraubenfedern 238 den Magneten, welcher wiederum kippbar angeordnet sein soll, in einer Mittellage halten sollen. Zur Sicherung des Magneten 232 und zur Gewährleistung seiner Beweglichkeit sind an seiner Unterseite im Querabstand voneinander (senkrecht zur Zeichnungsebene der Figur 6) zwei Laschen 240 befestigt, welche Langlöcher 242 besitzen, die von einem im Lastaufnahmeteil 224 befestigten Stift 244 durchgriffen werden. Die Figur 6 zeigt den Magneten 232 bei unbelastetem Lastträger, und es ist erkennbar, daß der Magnet 232 zum einen entgegen der Wirkung der Blattfeder 236 nach unten gedrückt werden kann, daß er sich aber auch entgegen der Wirkung einer der beiden Schraubenfedern 238 kippen läßt.

Bei den in den Figuren 5 und 6 dargestellten Ausführungsformen ist also der Magnet 132 bzw. 232 federnd und allseitig beweglich gelagert, damit er sich optimal an das an der Wagenheber-Ansetzstelle der Karosserie des anzuhebenden Fahrzeugs angeordnete ferromagnetische Element anpassen kann, vor allem während des Aufsuchens der Wagenheber-Ansetzstelle der Karosserie mit dem Lastträger des Wagenhebers, so daß der Wagenheber selbst noch nicht exakt seine Ansetzposition einnehmen muß, wenn der Magnet zu dem an der Fahrzeugkarosserie vorgesehenen ferromagnetischen Element hingezogen wird und dann an diesem haftet.

Aus dieser Funktionsbeschreibung ergibt sich, daß die bewegliche Halterung des Magneten am Lastträger auch dann Vorteile mit sich bringt, wenn auf den Magneten einwirkende Federn nicht vorhanden sind, da die Wechselwirkung zwischen dem Magneten und dem an der Fahrzeugkarosserie angeordneten ferromagnetischen Element ausreichen würde, beim Annähern des Wagenheber-Lastträgers an dieses ferromagnetische Element den Magneten relativ zum eigentlichen Lastträger so zu bewegen, daß die Distanz zum ferromagnetischen Element der Fahrzeugkarosserie vermindert wird. Das Vorsehen einer oder mehrerer Federn ist aber aus mehreren Gründen zu bevorzugen: Zum einen wird dadurch ein Klappern des Magneten bei z.B. im Kofferraum eines Fahrzeugs weggestautem Wagenheber verhindert, und zum anderen ist es natürlich für das Auffinden der richtigen Ansetzstelle des Wagenheber-Lastträgers an der Karosserie des anzuhebenden Fahrzeugs von Vorteil, wenn der Magnet aus dem Lastträger des Wagenhebers herausragt.

## Patentansprüche

1. Wagenheber mit einem auf dem Boden aufsetzbaren Fuß und einem an einem nicht-ferromagnetischen, eine Wagenheber-Ansetzstelle aufweisenden Karosseriebereich eines anzuhebenden Fahrzeugs mit einem Lastaufnahmebereich ansetzbaren, gegenüber dem Fuß höhenverstellbaren Lastträger, **dadurch gekennzeichnet,** daß der Lastaufnahmebereich des Wagenheber-Lastträgers mit einem Magneten zum Zusammenwirken mit einem an der Wagenheber-Ansetzstelle angeordneten ferromagnetischen Element versehen ist.

2. Hebevorrichtung zum Anheben eines Fahrzeugs, bestehend aus einem nicht-ferromagnetischen, eine Wagenheber-Ansetzstelle aufweisenden Karosseriebereich des anzuhebenden Fahrzeugs und einem Wagenheber mit einem auf dem Boden aufsetzbaren Fuß und einem gegenüber dem Fuß höhenverstellbaren Lastträger, welcher einen an der Ansetzstelle ansetzbaren Lastaufnahmebereich aufweist, dadurch gekennzeichnet, daß der Lastaufnahmebereich des Wagenheber-Lastträgers mit einem Magneten und die Ansetzstelle mit einem ferromagnetischen Element versehen ist.

3. Vorrichtung nach Anspruch 1 oder 2, dadurch gekennzeichnet, daß der Magnet in ein die Hublast aufnehmendes Teil eingelassen und somit lastfrei ist.

4. Vorrichtung nach einem oder mehreren der Ansprüche 1 bis 3, dadurch gekennzeichnet, daß der Magnet ein Permanentmagnet und für diesen eine schaltbare Kurzschlußeinrichtung vorgesehen ist.

5. Vorrichtung nach Anspruch 1 oder 2, dadurch gekennzeichent, daß das ferromagnetische Element aus Stahl besteht.

6. Vorrichtung nach einem der vorstehenden Ansprüche, dadurch gekennzeichnet, daß der Lastaufnahmebereich des Wagenheber-Lastträgers eine die Hublast aufnehmende Auflagefläche für die Wagenheber-Ansetzstelle aufweist, daß der Magnet auf dieser Auflagefläche einen Vorsprung bildet und daß die Wagenheber-Ansetzstelle eine Aussparung für einen Eingriff dieses Vorsprungs von unten sowie in dieser Aussparung das ferromagnetische Element aufweist.

7. Vorrichtung nach Anspruch 6, dadurch gekennzeichnet, daß das ferromagnetische Element den Boden der Aussparung bildet.

8. Vorrichtung nach einem der vorstehenden Ansprüche, dadurch gekennzeichnet, daß die Wagenheber- Ansetzstelle von einem an der Karosserie befestigten nichtmetallischen Teil gebildet wird.

9. Vorrichtung nach Anspruch 8, dadurch gekennzeichnet, daß das nichtmetallische Teil ein Kunststoff- oder Gummiteil ist.

10. Vorrichtung nach Anspruch 8 oder 9, dadurch gekennzeichnet, daß das nichtmetallische Teil eine ungefähr pilzförmige Gestalt hat, mit seinem Fuß in ein Loch der Karosserie eingreift und dort verrastet ist sowie sich mit dem Pilzkopf von unten an der Karosserie abstützt.

11. Vorrichtung nach Anspruch 6, dadurch gekennzeichnet, daß der Vorsprung von dem Magneten und einer diesen aufnehmenden Aufnahme gebildet wird, welche den Magneten mindestens bei belastetem Lastträger überragt.

12. Vorrichtung nach einem der Ansprüche 1 bis 10, dadurch gekennzeichnet, daß Magnet und ferromagnetisches Element vertauscht sind.

13. Vorrichtung nach einem oder mehreren der Ansprüche 1 bis 11, dadurch gekennzeichnet, daß auch das ferromagnetische Element ein Magnet ist.

14. Vorrichtung nach einem oder mehreren der vorstehenden Ansprüche, dadurch gekennzeichnet, daß mindestens die meisten Teile des Wagenhebers, ausgenommen der Magnet, aus einer Leichtmetall-Legierung bestehen.

15. Vorrichtung nach einem oder mehreren der vorstehenden Ansprüche, dadurch gekennzeichnet, daß der Magnet am Lastträger - insbesondere federnd - begrenzt beweglich gehalten ist.

16. Vorrichtung nach Anspruch 15, dadurch gekennzeichnet, daß der Magnet in Richtung weg vom Lastträger-Lastaufnahmebereich gefedert ist.

17. Vorrichtung nach Anspruch 15 oder 16, dadurch gekennzeichnet, daß der Lastaufnahmebereich mit einer Aussparung zur Aufnahme des Magneten versehen ist, in welcher letzterer zwischen Stellungen, in denen der Magnet vollständig innerhalb der Aussparung angeordnet ist, und Stellungen, in denen der Magnet aus der Aussparung herausragt, beweglich gehalten ist.

18. Vorrichtung nach den Ansprüchen 16 und 17, gekennzeichnet durch wenigstens eine in der Aussparung angeordnete Feder, welche so angeordnet und ausgebildet ist, daß bei belastetem Lastträger der Magnet entgegen der Wirkung dieser Feder in die Aussparung eingetaucht ist und bei unbelastetem Lastträger unter der Wirkung dieser Feder aus dieser Aussparung herausragt.

19. Vorrichtung nach einem oder mehreren der Ansprüche 15 bis 18, dadurch gekennzeichnet, daß der Magnet am Lastträger in Richtung weg vom Lastträger-Lastaufnahmebereich verschiebbar geführt ist.

20. Vorrichtung nach einem oder mehreren der Ansprüche 15 bis 19, dadurch gekennzeichnet, daß der Magnet am Lastträger kippbar gehalten ist.

## Claims

1. Vehicle jack comprising a foot positionable on the ground and a load carrier vertically adjustable relative to the foot and adapted to be placed with a load-receiving region against a non-ferromagnetic region of the body of a vehicle to be raised, said vehicle body region having an application point for the vehicle jack, characterized in that the load-receiving region of the load carrier of the vehicle jack is provided with a magnet for cooperating with a ferromagnetic element arranged at the application point for the vehicle jack.

2. Lifting device for raising a vehicle, consisting of a non-ferromagnetic region of the body of the vehicle to be raised, said vehicle body region having an application point for the vehicle jack, and of a vehicle jack with a foot positionable on the ground and a load carrier vertically adjustable relative to the foot and having a load-receiving region adapted to be placed against the application point, characterized in that the load-receiving region of the load carrier of the vehicle jack is provided with a magnet and the application point with a ferromagnetic element.

3. Device as defined in claim 1 or 2, characterized in that the magnet is inserted in a part which receives the lifting load, and the magnet is thus unloaded.

4. Device as defined in one or several of claims 1 to 3, characterized in that the magnet is a permanent magnet and a switchable short-circuit device is provided for this permanent magnet.

5. Device as defined in claim 1 or 2, characterized in that the ferromagnetic element consists of steel.

6. Device as defined in one of the preceding claims, characterized in that the load-receiving region of the load carrier of the vehicle jack has a bearing surface for the application point for the vehicle jack, said bearing surface receiving the lifting load, in that the magnet forms a projection on this bearing surface, and in that the application point for the vehicle jack has a recess for engagement of this projection from below and accommodates the ferromagnetic element in this recess.

7. Device as defined in claim 6, characterized in that the ferromagnetic element forms the bottom of the recess.

8. Device as defined in one of the preceding claims, characterized in that the application point for the vehicle jack is formed by a non-metallic part attached to the vehicle body.

9. Device as defined in claim 8, characterized in that the non-metallic part is a plastic or rubber part.

10. Device as defined in claim 8 or 9, characterized in that the non-metallic part is of approximately mushroom-shaped configuration, engages with its foot in a hole in the vehicle body and is locked therein and with the mushroom head is supported from below on the vehicle body.

11. Device as defined in claim 6, characterized in that the projection is formed by the magnet and a receiving means receiving the magnet, said receiving means projecting above the magnet at least when the load carrier is loaded.

12. Device as defined in one of claims 1 to 10, characterized in that magnet and ferromagnetic element are exchanged.

13. Device as defined in one or several of claims 1 to 11, characterized in that the ferromagnetic element is also a magnet.

14. Device as defined in one or several of the preceding claims, characterized in that at least most of the parts of the vehicle jack, with the exception of the magnet, consist of a light metal alloy.

15. Device as defined in one or several of the preceding claims, characterized in that the magnet is held - in particular, resiliently - so as to be moveable to a limited extent on the load carrier.

16. Device as defined in claim 15, characterized in that the magnet is spring-loaded in the direction away from the load-receiving region of the load carrier.

17. Device as defined in claim 15 or 16, characterized in that the load-receiving region is provided with a recess for receiving the magnet, the latter being held therein so as to be moveable between positions in which the magnet is completely arranged within the recess and positions in which the magnet protrudes out of the recess.

18. Device as defined in claims 16 and 17, characterized by at least one spring arranged in the recess, the spring being arranged and designed such that when the load carrier is loaded, the magnet is submerged in the recess against the action of this spring, and when the load carrier is unloaded, the magnet protrudes out of this recess under the action of this spring.

19. Device as defined in one or several of claims 15 to 18, characterized in that the magnet is guided on the load carrier so as to be displaceable in the direction away from the load-receiving region of the load carrier.

20. Device as defined in one or several of claims 15 to 19, characterized in that the magnet is held so as to be tiltable on the load carrier.

## Revendications

1. Cric comportant un pied susceptible d'être posé sur le sol et un support de charge réglable en hauteur par rapport au pied et susceptible d'être appliqué contre une zone de carrosserie non ferromagnétique d'un véhicule à soulever, ladite zone présentant un emplacement d'application de cric, avec une zone de réception de charge, caractérisé en ce que la zone de réception de charge du support de charge du cric est pourvue d'un aimant pour la coopération avec un élément ferromagnétique agencé à l'emplacement d'application de cric.

2. Dispositif de soulèvement pour soulever un véhicule, constitué par une zone de carrosserie non ferromagnétique d'un véhicule à soulever, qui présente un emplacement d'application de cric, et par un cric comportant un pied susceptible d'être posé sur le sol et un support de charge réglable en hauteur par rapport au pied, qui présente une zone de réception de charge pouvant être appliquée à l'emplacement d'application, caractérisé en ce que la zone de réception de charge du support de charge du cric est pourvue d'un aimant, et en ce que l'emplacement d'application est pourvu d'un élément ferromagnétique.

3. Dispositif selon l'une ou l'autre des revendications 1 et 2, caractérisé en ce que l'aimant est formé dans une partie recevant la charge de soulèvement et est ainsi exempt de charge.

4. Dispositif selon l'une ou plusieurs des revendications 1 à 3, caractérisé en ce que l'aimant est un aimant permanent, et en ce qu'il est prévu un dispositif de court-circuit commutable pour celui-ci.

5. Dispositif selon l'une ou l'autre des revendications 1 et 2, caractérisé en ce que l'élément ferromagnétique est constitué en acier.

6. Dispositif selon l'une quelconque des revendications précédentes, caractérisé en ce que la zone de réception de charge du support de charge du cric présente une surface d'appui recevant la charge de soulèvement pour l'emplacement d'application de cric, en ce que l'aimant forme sur cette surface de support une saillie, en ce que l'emplacement d'application de cric présente un évidement pour l'engagement de cette saillie depuis le bas, et en ce que l'élément ferromagnétique est dans cet évidement.

7. Dispositif selon la revendication 6, caractérisé en ce que l'élément ferromagnétique forme le fond de l'évidement.

8. Dispositif selon l'une quelconque des revendications précédentes, caractérisé en ce que l'emplacement d'application de cric est formé par une partie non métallique fixée sur la carrosserie.

9. Dispositif selon la revendication 8, caractérisé en ce que la partie non métallique est une partie en matière plastique ou en caoutchouc.

10. Dispositif selon l'une ou l'autre des revendications 8 et 9, caractérisé en ce que la partie non métallique présente approximativement la forme d'un champignon, qui s'engage par son pied dans un trou de la carrosserie et y est enclenché, et qui s'appuie par la tête de champignon depuis le bas contre la carrosserie.

11. Dispositif selon la revendication 6, caractérisé en ce que la saillie est formée par l'aimant et par un logement recevant celui-ci, ledit logement dépassant l'aimant au moins lorsque le support de charge est sollicité.

12. Dispositif selon l'une quelconque des revendications 1 à 10, caractérisé en ce que l'aimant et l'élément ferromagnétique sont échangés l'un contre l'autre.

13. Dispositif selon l'une ou plusieurs des revendications 1 à 11, caractérisé en ce que l'élément ferromagnétique est également un aimant.

14. Dispositif selon l'une ou plusieurs des revendications précédentes, caractérisé en ce qu'au moins la plupart des parties du cric, exception faite de l'aimant, sont constituées en un alliage de métal léger.

15. Dispositif selon l'une ou plusieurs des revendications précédentes, caractérisé en ce que l'aimant est retenu avec mobilité limitée, en particulier élastiquement, sur le support de charge.

16. Dispositif selon la revendication 15, caractérisé en ce que l'aimant est élastique en direction éloignée de la zone de réception de charge du support de charge.

17. Dispositif selon l'une ou l'autre des revendications 15 et 16, caractérisé en ce que la zone de réception de charge est pourvue d'un évidement pour recevoir l'aimant, dans lequel l'aimant est retenu de façon mobile entre des positions dans lesquelles l'aimant est agencé complètement à l'intérieur de l'évidement, et des positions dans lesquelles l'aimant dépasse hors de l'évidement.

18. Dispositif selon les revendications 16 et 17, caractérisé par au moins un ressort agencé dans l'évidement, qui est agencé et formé de telle sorte que l'aimant plonge à l'encontre de l'effet de ce ressort dans l'évidement lorsque le support de charge est sollicité, et dépasse hors de cet évidement grâce à l'effet de ce ressort, lorsque le support de charge n'est pas sollicité.

19. Dispositif selon l'une ou plusieurs des revendications 15 à 18, caractérisé en ce que l'aimant est guidé sur le support de charge de façon mobile en direction éloignée de la zone de réception de charge du support de charge.

20. Dispositif selon l'une ou plusieurs des revendications 15 à 19, caractérisé en ce que l'aimant est retenu en basculement sur le support de charge.
